# EUROPEAN PATENT APPLICATION

(11) **EP 1 715 153 A1**
(43) Date of publication of application: **25.10.2006**
(21) Application number: 05704352.3
(22) Date of filing: 02.02.2005
(51) Int. Cl.: F01N 3/24, B01D 53/94, F01N 3/08, F01N 3/20, F01N 3/28, F01N 7/08

(54) **SCR MUFFLER**

(30) Priority: 12.02.2004 JP 2004035449
(71) Applicant: Tokyo Roki Co. Ltd., Tsuzuki-ku Yokohama-shi Kanagawa 2240041 (JP); Nissan Diesel Motor Co., Ltd., Ageo-shi Saitama 362-8523 (JP)
(72) Inventor: SHIRAI, Daisuke, c/o Tokyo Roki Co. Ltd., Yokohama-shi, Kanagawa 2240041 (JP); HIRAMOTO, Hitoshi, c/o Tokyo Roki Co. Ltd., Yokohama-shi, Kanagawa 2240041 (JP); KANAYA, Isamu, c/o Nissan Diesel Motor Co., Ltd., Ageo-shi, Saitama 3628523 (JP); UENO, Hiroki, c/o Nissan Diesel Motor Co., Ltd., Ageo-shi, Saitama 3628523 (JP)
(74) Representative: Horner, Martin Grenville
(86) International application number: PCT/JP2005/001457
(87) International publication number: WO 2005/078251

(57) **Abstract**

An SCR muffler retains the heat of a reducing agent, etc., supplying nozzle and an exhaust pipe, thereby preventing the reduction of the efficiency of an SCR catalyst purging nitrogen oxide (NOx) even at low temperatures and improving the durability of the reducing agent, etc., supplying nozzle. The SCR muffler comprises an SCR catalyst 1 for selectively reducing and purging nitrogen oxide (NOx) contained in exhaust gas; an exhaust pipe 2 that allows the exhaust gas to flow into the SCR catalyst; and a reducing agent, etc., supplying nozzle 3 that supplies a reducing agent or a reducing agent precursor to the exhaust gas. The reducing agent, etc., supplying nozzle 3 or the exhaust pipe 2 is of a heat-retaining double pipe structure.

## Description

### CROSS-REFERENCE TO RELATED APPLICATIONS

The present application claims priority from Japanese Patent Application No. 2004-35449 filed on February 12, 2004, which is herein incorporated by reference.

### TECHNICAL FIELD

The present invention relates to an SCR muffler with an SCR catalyst for selectively reducing and purging nitrogen oxide (NOx) contained in exhaust gas.

### BACKGROUND ART

In these years, as to particulate matter (PM) and nitrogen oxide (NOx) contained in exhaust gas exhausted from internal combustion engines such as diesel-engines, the necessity of purging them is high because of the problem of environment pollution such as acid rain and photochemical smog.

Accordingly, there is conventional technology in which, in the exhaust system of an internal combustion engine, a reducing agent or a reducing agent precursor such as urea water is supplied by spraying to exhaust gas via a reducing agent, etc., supplying nozzle from upstream of an SCR muffler having a selective reduction SCR (Selective Catalytic Reduction) catalyst, thereby selectively reducing and purging nitrogen oxide (NOx) contained in exhaust gas by the SCR catalyst. See, e.g., Japanese Patent Application Laid-Open Publication No. 2001-20724.

Furthermore, since at low temperatures the efficiency of the SCR catalyst purging nitrogen oxide (NOx) is low, there is technology in which a muffler is made of a heat insulator or covered by a heat insulating cover, thereby retaining the heat of the SCR catalyst.

However, with such conventional technology, the heat of the SCR catalyst itself is retained, but it is not that the heat of the reducing agent, etc., supplying nozzle and the exhaust pipe upstream of the catalyst is retained.

Hence, there is the problem that at low temperatures a reducing agent or a reducing agent precursor such as urea water is cooled to be solidified in the reducing agent, etc., supplying nozzle and cannot be stably supplied to exhaust gas, thus being unable to prevent the reduction of the efficiency of the SCR catalyst purging nitrogen oxide (NOx).

Furthermore, there is the problem that at low temperatures, even a reducing agent or a reducing agent precursor such as urea water mixed and in contact with exhaust gas is cooled to be solidified in the exhaust pipe before flowing into the SCR catalyst and hence cannot stably flow into the SCR catalyst, thus being unable to prevent the reduction of the efficiency of the SCR catalyst purging nitrogen oxide (NOx).

Moreover, with conventional technology, there is the problem that a reducing agent, etc., supplying nozzle, which is affected by vibrations of the vehicle, exhaust gas, and the like, is subject to damage and deformation and is low in durability.

### DISCLOSURE OF THE INVENTION

Accordingly, an object of the present invention is to provide an SCR muffler that can retain the heat of the reducing agent, etc., supplying nozzle and the exhaust pipe, thereby preventing the reduction of the efficiency of the SCR catalyst purging nitrogen oxide (NOx) even at low temperatures and improving the durability of the reducing agent, etc., supplying nozzle.

The present invention to solve the above problems is an SCR muffler which comprises an SCR catalyst for selectively reducing and purging nitrogen oxide (NOx) contained in exhaust gas; an exhaust pipe that allows the exhaust gas to flow into the SCR catalyst; and a reducing agent, etc., supplying nozzle that supplies a reducing agent or a reducing agent precursor to the exhaust gas. The SCR muffler is characterized in that the reducing agent, etc., supplying nozzle is of a double pipe structure.

Further, the SCR muffler of the invention may be characterized in that a heat retaining material is provided in between an inner pipe and an outer pipe that form the double pipe structure.

Alternatively, the SCR muffler of the invention may be characterized in that there is a space defined between an inner pipe and an outer pipe that form the double pipe structure.

Another implementation of the invention is an SCR muffler which comprises an SCR catalyst for selectively reducing and purging nitrogen oxide (NOx) contained in exhaust gas; an exhaust pipe that allows the exhaust gas to flow into the SCR catalyst; and a reducing agent, etc., supplying nozzle that supplies a reducing agent or a reducing agent precursor to the exhaust gas. The SCR muffler is characterized in that the exhaust pipe is of a double pipe structure.

The SCR muffler of the invention may be characterized in that a heat retaining material is provided in between an inner pipe and an outer pipe that form the double pipe structure.

Alternatively, the SCR muffler of the invention may be characterized in that there is a space defined between an inner pipe and an outer pipe that form the double pipe structure.

### BRIEF DESCRIPTION OF THE DRAWINGS

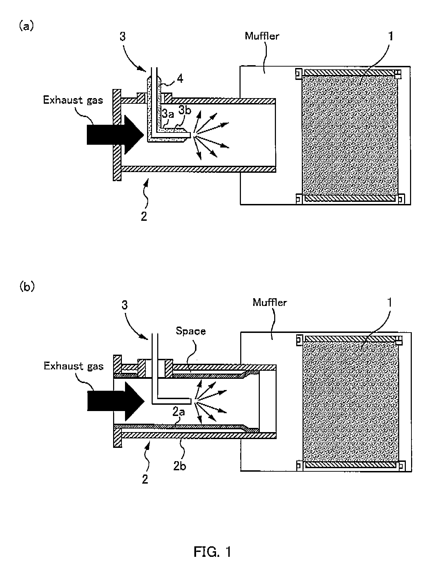

FIG. 1 is a basic schematic view of an SCR muffler according to an embodiment of the present invention.

### <Explanation of Reference Numerals>

1 SCR catalyst, 2 (2a, 2b) Exhaust pipe (inner and outer pipes), 3(3a, 3b) Reducing agent, etc., supplying nozzle (inner and outer pipes), 4 Heat retaining material

### BEST MODE FOR CARRYING OUT THE INVENTION

The best mode for implementing an SCR muffler of the present invention will be described below with reference to the accompanying drawings.

FIG. 1 is a basic schematic view of an SCR muffler according to an embodiment of the present invention, which comprises an SCR catalyst 1 for selectively reducing and purging nitrogen oxide (NOx) contained in exhaust gas, an exhaust pipe 2 that allows exhaust gas to flow into the SCR catalyst 1, and a reducing agent, etc., supplying nozzle 3 that supplies a reducing agent or a reducing agent precursor to exhaust gas, the reducing agent, etc., supplying nozzle 3 or the exhaust pipe 2 having a heat-retaining double pipe structure.

FIG. 1 (a) shows an SCR muffler with a reducing agent, etc., supplying nozzle 3 having a heat-retaining double pipe structure, and FIG. 1 (b) shows an SCR muffler with an exhaust pipe 2 having a heat-retaining double pipe structure.

In the SCR muffler with such a configuration, exhaust gas passes through the exhaust pipe 2 in a direction from upstream to downstream and flows into the SCR catalyst 1.

Exhaust gas is exhausted from an internal combustion engine such as a diesel-engine and contains as toxic substances unburned hydrocarbon (HC), carbon monoxide (CO), and nitrogen oxide (NOx) such as nitric monoxide (NO) and nitric dioxide (NO₂).

Such exhaust gas is supplied via the reducing agent, etc., supplying nozzle 3 with a reducing agent or a reducing agent precursor during the time before flowing into the SCR catalyst 1. The reducing agent or reducing agent precursor includes a reducing agent precursor such as a substance that liberates a reducing agent, as well as a reducing agent itself, and may be any of hydrocarbon, cyanurate, ammonia, ammonium carbonate, ammonium carbamate, urea, and combinations of them. Furthermore, the reducing agent or reducing agent precursor may be in the form of any of solid, liquid, and gas.

For example, the reducing agent, etc., supplying nozzle 3 may supply ammonia itself as a reducing agent, but ammonia is strong in smell and high in toxicity at a relatively high concentration. Hence, urea water of low toxicity as a reducing agent precursor is preferably supplied by spraying. In this case, urea in urea water is mixed and in contact with exhaust gas in the exhaust pipe, and is thermally or hydrolytically resolved to liberate ammonia, a reducing agent.

Where the reducing agent, etc., supplying nozzle 3 is of a heat-retaining double pipe structure as shown in FIG. 1 (a), even at low temperatures, a reducing agent or a reducing agent precursor such as urea water is hardly cooled in the reducing agent, etc., supplying nozzle, and hence is hardly stuck in the reducing agent, etc. , supplying nozzle 3 and is stably supplied to exhaust gas.

Although FIG. 1 (a) shows the outer side of the reducing agent, etc., supplying nozzle 3 is of a double pipe structure, the invention is not limited to this. The inner side of the reducing agent, etc., supplying nozzle 3 may be of a double pipe structure.

Also, inside the double pipe structure, i.e., between an inner pipe 3a and an outer pipe 3b forming the double pipe structure, there may be a space, but the space is preferably filled with a heat retaining material or the like of low heat conductivity from the point of view of raising the capability to retain the heat. In the Figure, a heat retaining material 4 is provided in between the inner pipe 3a and the outer pipe 3b forming the double pipe structure of the reducing agent, etc., supplying nozzle 3. The material, etc., of the heat retaining material 4 is not limited to a specific one.

Since the double pipe structure also reinforces the reducing agent, etc., supplying nozzle 3, the durability of the reducing agent, etc., supplying nozzle 3 is improved.

Thereafter, exhaust gas flows through the exhaust pipe further in the downstream direction, and flows into the SCR catalyst 1, where nitrogen oxide (NOx) contained in the exhaust gas is absorbed into the SCR catalyst 1 and selectively reduced and purged. As a result, the nitrogen oxide (NOx) is transformed into nitrogen and water, which are gentle to the environment.

Meanwhile, where the exhaust pipe 2 is of a heat-retaining double pipe structure as shown in FIG. 1 (b), exhaust gas heat is hard to be released outside the exhaust pipe, and the heat is retained inside the exhaust pipe. Hence, even at low temperatures, a reducing agent or a reducing agent precursor such as urea water supplied by spraying to exhaust gas is hardly cooled in the exhaust pipe. As a result, the reducing agent or reducing agent precursor such as urea water hardly precipitates in the exhaust pipe and is stably supplied to the SCR catalyst 1 together with exhaust gas.

In FIG. 1 (b), the inside of the exhaust pipe 2 being of a heat-retaining double pipe structure, its upstream side is fixed by a flange, while on the downstream side of the double pipe structure, the exhaust pipe inside gradually expands toward the downstream so as to allow exhaust gas to easily flow into the SCR catalyst 1. However, the invention is not limited to this. For example, the outside of the exhaust pipe 2 may be of a heat-retaining double pipe structure, or the downstream side of the double pipe structure may be fixed by not only a flange but also welding, bolts, or the like. Alternatively, the exhaust pipe inside may take a structure that expands stepwise.

Also, inside the double pipe structure, i.e., between an inner pipe 2a and an outer pipe 2b forming the double pipe structure, there may be a space, but the space is preferably filled with a heat retaining material or the like of low heat conductivity from the point of view of raising the capability to retain the heat. In the Figure, there is a space defined between the inner pipe 2a and the outer pipe 2b forming the double pipe structure of the exhaust pipe 2.

The SCR (Selective Catalytic Reduction) catalyst 1 may be made of any of titanium dioxide (TiO₂), vanadium pentoxide (V₂O₅), tungstic trioxide (WO₃), molybdenum trioxide (MoO₃), silicon dioxide (SiO₂), sulfate, zeolite, etc., and combinations thereof. Also, the SCR catalyst 1 may be cased, or supported by a catalyst support having a honeycomb structure.

### INDUSTRIAL APPLICABILITY

According to the present invention, the SCR muffler retains the heat of the reducing agent, etc., supplying nozzle and the exhaust pipe, thereby preventing the reduction of the efficiency of the SCR catalyst purging nitrogen oxide (NOx) even at low temperatures and improving the durability of the reducing agent, etc., supplying nozzle.

## Claims

1. An SCR muffler which comprises:
an SCR catalyst for selectively reducing and purging nitrogen oxide (NOx) contained in exhaust gas;
an exhaust pipe that allows the exhaust gas to flow into the SCR catalyst; and
a reducing agent, etc., supplying nozzle that supplies a reducing agent or a reducing agent precursor to the exhaust gas,
**characterized in that** the reducing agent, etc., supplying nozzle is of a double pipe structure.

2. The SCR muffler according to claim 1, **characterized in that** a heat retaining material is provided in between an inner pipe and an outer pipe that form the double pipe structure.

3. The SCR muffler according to claim 1, **characterized in that** there is a space defined between an inner pipe and an outer pipe that form the double pipe structure.

4. An SCR muffler which comprises:
an SCR catalyst for selectively reducing and purging nitrogen oxide (NOx) contained in exhaust gas;
an exhaust pipe that allows the exhaust gas to flow into the SCR catalyst; and
a reducing agent, etc., supplying nozzle that supplies a reducing agent or a reducing agent precursor to the exhaust gas,
**characterized in that** the exhaust pipe is of a double pipe structure.

5. The SCR muffler according to claim 4, **characterized in that** a heat retaining material is provided in between an inner pipe and an outer pipe that form the double pipe structure.

6. The SCR muffler according to claim 4, **characterized in that** there is a space defined between an inner pipe and an outer pipe that form the double pipe structure.
